# EUROPEAN PATENT APPLICATION

(11) **EP 4 647 952 A1**
(43) Date of publication of application: **12.11.2025**
(21) Application number: 25173521.3
(22) Date of filing: 30.04.2025
(51) Int. Cl.: G06F 21/60, G06F 8/60, G06F 8/65, G06F 9/445, H04L 67/00

(54) **COMPUTER SYSTEM AND METHOD FOR PROVIDING CRYPTOGRAPHIC CONFIGURATION FILES TO COMPUTER APPLICATIONS**

(30) Priority: 09.05.2024 US 202418659541
(71) Applicant: Schneider Electric USA, Inc., Andover, MA 01810 (US)
(72) Inventor: Han, Qingsheng, Andover, MA (US)
(74) Representative: Manitz Finsterwald Patent- und Rechtsanwaltspartnerschaft mbB

(57) **Abstract**

A computer-implemented method and system for providing a ciphered configuration file to a computer device having at least one application requiring a configuration file for enabling operation of the computer device. Received in the computer device, from a coupled system configuration manager component, is a ciphered configuration file required for operation of the computer device. Upon reception of the ciphered configuration file in the computer device, the received ciphered configuration is pushed to the at least one application in the computer device for execution by the application of the computer device for enabling operation of the computer device.

## Description

### Background

### 1. FIELD

The illustrated embodiments are generally to securely providing configuration files to a device, and more particularly securely updating a device's ciphered configuration files without causing interruption of the device.

### 2. DESCRIPTION OF RELATED ART

Installation of a typical application on a computing device usually requires a long setup and configuration process, which includes copying files, registering software components, installing runtimes, installing third-party components upon which the application is dependent, configuring setup files, and so forth. Additionally, user configuration including setting up user preferences, and other customization is also typically required.

Further, interactions between shared components and different versions of the same application frequently introduce errors when applications are installed, uninstalled, or upgraded. Within an organization, applications are typically installed by Information Technology ("IT") personnel and systems administrators. To protect information stored on networked computing devices, it may be desirable to configure the organization's computing devices with security measures. Unfortunately, many applications do not function properly on secured, locked-down desktops. Thus, IT personnel and systems administrators may be forced by the needs of the organization to compromise network security for application compatibility.

There is currently no automated processes for identifying cipher configuration files for secure applications executing on computer devices, as well as firmware updates being needed to ensure up-to-date cipher lists, especially on industrial automation devices without causing interruption of such industrial automation devices, which often have costly consequences downtime of such devices. Additionally, with the increasing emergence of quantum computing and other advanced computing platforms that can rapidly decipher ciphered security protocols, such as those utilized in ciphered configurations files, which are critical for proper operation of Operational technology (OT) devices (especially those in industrial applications), the ability of an enterprise's ecosystem to ensure its fundamental cryptographic primitives are current, reliable and robust is becoming more and more critical. For instance, it's critical for an enterprise to have the ability to rapidly change is security protocols (e.g., cryptographic primitives used for generating ciphered configuration files) without impacting OT system functionality.

### SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings.

To achieve these and other advantages and in accordance with the purpose of the illustrated embodiments, in one aspect, described is a computer-implemented method and system for providing a ciphered configuration file to a computer device having at least one application requiring a configuration file for enabling operation of the computer device. Received in the computer device, from a coupled system configuration manager component, is a ciphered configuration file required for operation of the computer device. Upon reception of the ciphered configuration file in the computer device, the received ciphered configuration is pushed to the at least one application in the computer device for execution by the application for enabling operation of the computer device.

In accordance with the illustrated embodiments, the computer device preferably includes a device configuration manger component communicatively coupled the system configuration manager component, via a secure communication component. The device configuration manager component is configured and operative to, upon initiation of the computer device, to provide a call to the system configuration manger component requesting the ciphered configuration file so as to then provide the received ciphered configuration file to the at least one application. In certain embodiments, the computer device includes a storage component, communicatively coupled to the device configuration manger component, being configured to store one or more ciphered configuration files required for execution by the at least one application. The device configuration manager component being configured to provide the ciphered configuration file received from the system configuration manager component to the at least one application for execution, and to the storage component for storage therein. The device configuration manager component is further configured to, upon initialization of the computer device, and responsive to no communication between the device configuration manager component and the system configuration manager component, retrieve from the storage a stored ciphered configuration file required for execution by the at least one application.

In another aspect of the illustrated embodiments, the system configuration manager component is further configured and operative to transmit an updated ciphered configuration file to the device configuration manger component responsive to determining the updated ciphered configuration file is applicable to the at least one application, during operation of the computer device, causing the device configuration manger component to store the received updated ciphered configuration file in the storage component. In certain embodiments, the device configuration manger is further configured and operative to message the at least one application executing on the device indicating an updated ciphered configuration file has been received causing the at least one application to request and then initiate execution of the updated ciphered file for continued operation thereof.

### BRIEF DESCRIPTION OF THE DRAWINGS

So that those skilled in the art to which the subject disclosure appertains will readily understand how to make and use the devices and methods of the subject disclosure without undue experimentation, preferred illustrated embodiments thereof will be described in detail herein below with reference to certain figures, wherein:
FIG. 1 illustrates an example communication network utilized with one or more of the illustrated embodiments;
FIG. 2 illustrates an example network device/node utilized with one or more of the illustrated embodiments;
FIG. 3 illustrates a system level diagram depicting certain components utilized with one or more of the illustrated embodiments; and
FIG. 4 is a flowchart depicting a method of operation in accordance with one or more of the illustrated embodiments.

### DESCRIPTION OF CERTAIN EMBODIMENTS

The illustrated embodiments are now described more fully with reference to the accompanying drawings wherein like reference numerals identify similar structural/functional features. The illustrated embodiments are not limited in any way to what is illustrated as the illustrated embodiments described below are merely exemplary, which can be embodied in various forms, as appreciated by one skilled in the art. Therefore, it is to be understood that any structural and functional details disclosed herein are not to be interpreted as limiting, but merely as a basis for the claims and as a representation for teaching one skilled in the art to variously employ the discussed embodiments. Furthermore, the terms and phrases used herein are not intended to be limiting but rather to provide an understandable description of the illustrated embodiments.

Unless defined otherwise, all technical and scientific terms used herein have the same meaning as commonly understood by one of ordinary skill in the art to which this illustrated embodiment belongs. Although any methods and materials similar or equivalent to those described herein can also be used in the practice or testing of the illustrated embodiments, exemplary methods and materials are now described.

It must be noted that as used herein and in the appended claims, the singular forms "a", "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth.

It is to be appreciated the illustrated embodiments discussed below are preferably a software algorithm, program or code residing on computer useable medium having control logic for enabling execution on a machine having a computer processor. The machine typically includes memory storage configured to provide output from execution of the computer algorithm or program.

As used herein, the term "software" is meant to be synonymous with any code or program that can be in a processor of a host computer, regardless of whether the implementation is in hardware, firmware or as a software computer product available on a disc, a memory storage device, or for download from a remote machine. The embodiments described herein include such software to implement the equations, relationships and algorithms described above. One skilled in the art will appreciate further features and advantages of the illustrated embodiments based on the above-described embodiments. Accordingly, the illustrated embodiments are not to be limited by what has been particularly shown and described, except as indicated by the appended claims.

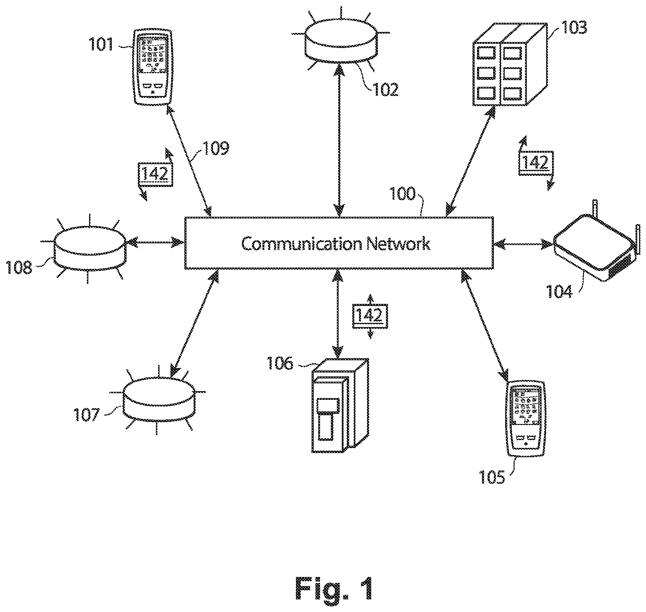

Turning now descriptively to the drawings, in which similar reference characters denote similar elements throughout the several views, FIG. 1 depicts an exemplary communications network 100 in which below illustrated embodiments may be implemented. It is to be understood a communication network 100 is a geographically distributed collection of nodes interconnected by communication links and segments for transporting data between end nodes, such as personal computers, work stations, smart phone devices, tablets, televisions, sensors and or other devices such as automobiles, etc. Many types of networks are available, with the types ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links, or Powerline Communications (PLC), and others.

FIG. 1 is a schematic block diagram of an exemplary communication network 100 comprising nodes/devices 101-108 (e.g., sensors 102, computing devices 103, smart phone devices 105, web servers / computer systems 106, computer systems 107, switches 108, databases, and the like) interconnected by various methods of communication. For instance, the links 109 may be wired links or may comprise a wireless communication medium, where certain nodes are in communication with other nodes, e.g., based on distance, signal strength, current operational status, location, etc. Moreover, each of the devices can communicate data packets (or frames) 142 with other devices using predefined network communication protocols as will be appreciated by those skilled in the art, such as various wired protocols and wireless protocols etc., where appropriate. In this context, a protocol consists of a set of rules defining how the nodes interact with each other. Those skilled in the art will understand that any number of nodes, devices, links, etc. may be used in the computer network, and that the view shown herein is for simplicity. Also, while the embodiments are shown herein with reference to a general network cloud, the description herein is not so limited, and may be applied to networks that are hardwired.

As will be appreciated by one skilled in the art, aspects of the illustrated embodiments may be embodied as a system, method or computer program product. Accordingly, aspects of the illustrated embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the illustrated embodiments may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device. A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing. Computer program code for carrying out operations for aspects of the illustrated embodiments may be written in any combination of one or more programming languages, including an object oriented programming language such as Python, Golang, Ruby, ASP.NET, Java, , C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the illustrated embodiments are described below with reference to flowchart illustrations and/or block diagrams of methods, apparatus (systems) and computer program products according to the illustrated embodiments for providing one or more ciphered configuration files to a computer device having at least one application requiring a configuration file for enabling operation of the computer device (as described further below). It will be understood that each block of the flowchart illustrations and/or block diagrams, and combinations of blocks in the flowchart illustrations and/or block diagrams, can be implemented by computer program instructions. These computer program instructions may be provided to a processor of a computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

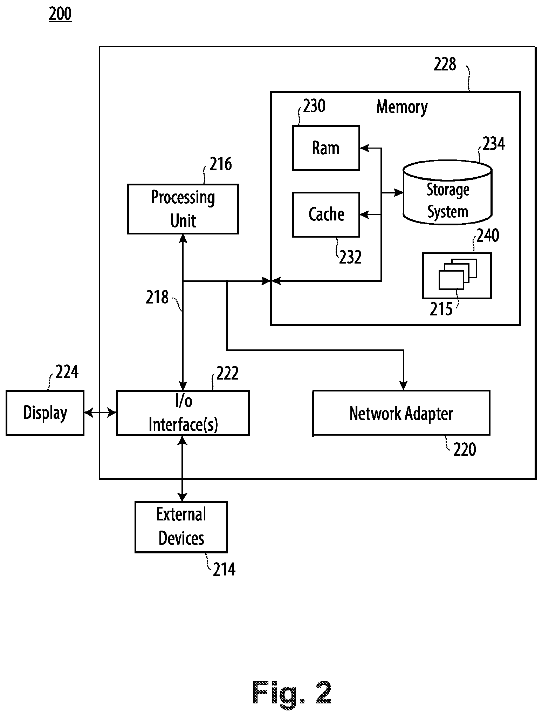

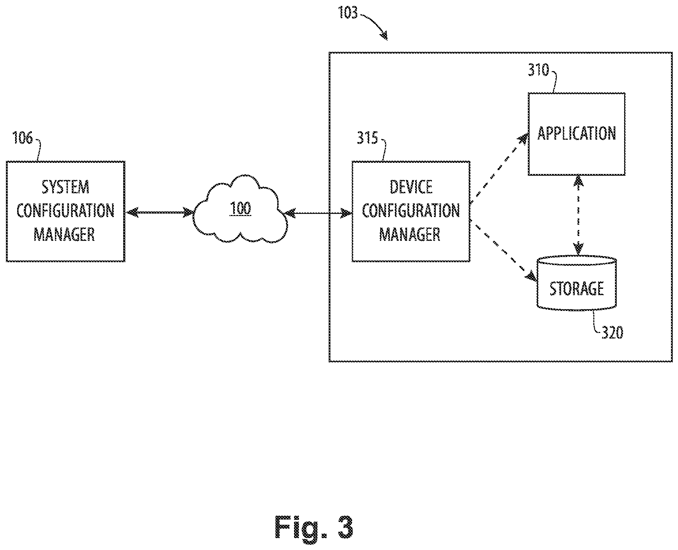

FIG. 2 is a schematic block diagram of an example network computing device 200 (e.g., computing device 103 and system configuration management computer component/system 106, etc.) that may be used (or components thereof) with one or more embodiments described herein (e.g., as the computer components shown in FIG. 3). As explained above, in different embodiments these various devices are configured to communicate with each other in any suitable way, such as, for example, via communication network 100.

Device 200 is intended to represent any type of computer system capable of carrying out the teachings of various illustrated embodiments. Device 200 is only one example of a suitable system and is not intended to suggest any limitation as to the scope of use or functionality of the illustrated embodiments described herein. Regardless, computing device 200 is capable of being implemented and/or performing any of the functionality set forth herein, including providing one or more ciphered configuration files to a computer device having at least one application requiring a configuration file for enabling operation of the computer device (as described further below).

Computing device 200 is operational with numerous computing system environments or configurations. Examples of computing systems, environments, and/or configurations that may be suitable for use with computing device 200 include, but are not limited to, cloud computing systems (including, but not limited to: Infrastructure as a Service (Iaas); Software as a Servuce (SaaS); Platform as a Service (PaaS); and Private cloud), personal computer systems, server computer systems, thin clients, thick clients, hand-held or laptop devices, multiprocessor systems, microprocessor-based systems, programmable consumer electronics, network PCs, minicomputer systems, and distributed data processing environments that include any of the above systems or devices, and the like. Computing device 200 may be described in the general context of computer system-executable instructions, such as program modules, being executed by a computer system. Generally, program modules may include routines, programs, objects, components, logic, data structures, and so on that perform particular tasks or implement particular abstract data types. Computing device 200 may be practiced in distributed data processing environments where tasks are performed by remote processing devices that are linked through a communications network. In a distributed data processing environment, program modules may be located in both local and remote computer system storage media including memory storage devices.

The components of device 200 may include, but are not limited to, one or more processors or processing units 216, a system memory 228, and a bus 218 that couples various system components including system memory 228 to processor 216. Bus 218 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus. Computing device 200 typically includes a variety of computer system readable media. Such media may be any available media that is accessible by device 200, and it includes both volatile and non-volatile media, removable and non-removable media.

System memory 228 can include computer system readable media in the form of volatile memory, such as random access memory (RAM) 230 and/or cache memory 232. Computing device 200 may further include other removable/non-removable, volatile/non-volatile computer system storage media. By way of example only, storage system 234 can be provided for reading from and writing to a non-removable, non-volatile magnetic media (not shown and typically called a "hard drive"). In such instances, each can be connected to bus 218 by one or more data media interfaces. As will be further depicted and described below, memory 228 may include at least one program product having a set (e.g., at least one) of program modules that are configured to carry out the functions of embodiments of illustrated embodiments.

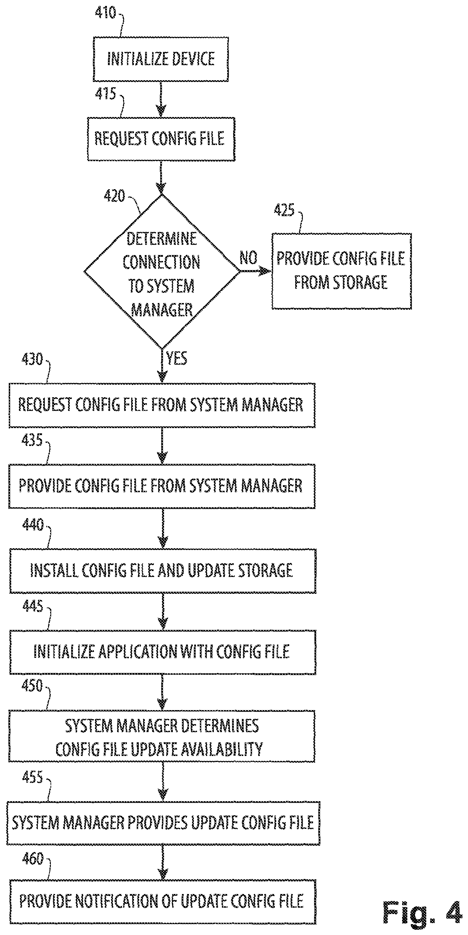

Program/utility 240, having a set (at least one) of program modules 215, such as underwriting module, may be stored in memory 228 by way of example, and not limitation, as well as an operating system, one or more application programs, other program modules, and program data. Each of the operating system, one or more application programs, other program modules, and program data or some combination thereof, may include an implementation of a networking environment. Program modules 215 generally carry out the functions and/or methodologies of the illustrated embodiments as described herein with reference to FIG. 4, including, but not limited to providing one or more ciphered configuration files to a computer device having at least one application requiring a configuration file for enabling operation of the computer device (as described further below).

Device 200 may also communicate with one or more external devices 214 such as a keyboard, a pointing device, a display 224, etc.; one or more devices that enable a user to interact with computing device 200; and/or any devices (e.g., network card, modem, etc.) that enable computing device 200 to communicate with one or more other computing devices. Such communication can occur via Input/Output (I/O) interfaces 222. Still yet, device 200 can communicate with one or more networks such as a local area network (LAN), a general wide area network (WAN), and/or a public network (e.g., the Internet) via network adapter 220. As depicted, network adapter 220 communicates with the other components of computing device 200 via bus 218. It should be understood that although not shown, other hardware and/or software components could be used in conjunction with device 200. Examples, include, but are not limited to: big data technologies encompassing large and diverse datasets that are significant in volume, which are commonly used in machine learning, predictive modeling, and other advanced analytics to solve business problems and make informed decisions; non-relational databases (NoSQLs); Blob storage; relational databases (SQL); as well as microcode, device drivers, redundant processing units, external disk drive arrays, RAID systems, tape drives, and data archival storage systems, etc.

FIGS. 1 and 2 are intended to provide a brief, general description of an illustrative and/or suitable exemplary environment in which the below described illustrated embodiments may be implemented. FIGS. 1 and 2 are exemplary of a suitable environment and are not intended to suggest any limitation as to the structure, scope of use, or functionality of an illustrated embodiment. A particular environment should not be interpreted as having any dependency or requirement relating to any one or combination of components illustrated in an exemplary operating environment. For example, in certain instances, one or more elements of an environment may be deemed not necessary and omitted. In other instances, one or more other elements may be deemed necessary and added.

With the exemplary computer communication network 100 (FIG. 1) and computing device 200 (FIG. 2) being generally shown and discussed above, description of certain illustrated embodiments will now be provided with below reference to FIG. 3. It is to be understood and appreciated that FIGS. 1-3 are intended to provide a brief, general description of an illustrative and/or suitable exemplary environment in which the below described illustrated embodiments may be implemented. FIGS. 1-3 are exemplary of a suitable environment and are not intended to suggest any limitation as to the structure, scope of use, or functionality of an illustrated embodiment. A particular environment should not be interpreted as having any dependency or requirement relating to any one or combination of components illustrated in an exemplary operating environment. For example, in certain instances, one or more elements of an environment may be deemed not necessary and omitted. In other instances, one or more other elements may be deemed necessary and added.

With reference now to FIG. 3, shown is an exemplary generalized system 300, utilizing one or more components of the aforementioned communication network 100 (FIG. 1), computing device 200 (FIG. 2), depicting one or more illustrated embodiments for providing one or more ciphered configuration files to a computer device 103 having at least one application 310 requiring a configuration file for enabling operation of the computer device 103 (as described further below). System 300 includes a system configuration manager component 106 communicatively coupled, preferably a secure communication network 100, to a computer device 103 requiring one or more configuration files for enabling operation of the computer device 103. For instance, the computer device 103, in certain illustrated embodiments, may consist of a programmable logic controller (PLC) device, that one skilled in the art recognizes is a small computer that controls industrial machinery through internal logic. For example, PLCs often automate processes, machine functions, or entire production lines. PLCs receive data from connected sensors or input devices, process the data, and trigger outputs based on preprogrammed parameters. In some embodiments, PLCs monitor and record run-time data such as machine productivity or operating temperature; automatically start and stop processes; and generate alarms if a machine malfunctions.

It is to be appreciated and understood that aforementioned configuration file (config file) is required for operation of the device 103, and is typically a ciphered file (e.g., a text file) that contains the settings and parameters for computer programs, server processes, and operating systems. For instance, it is to be appreciated that config files may be a type of user interface, allowing users to edit text instead of clicking buttons. For example, config files can be used to determine: storage paths, plug-ins to include, parameters, preferences, and alternative options. As one skilled in the art recognizes a config file is code implemented (executed) on a device 103 that often selects various features and settings required for operation of the device 103 (e.g., a PLC device).

In accordance with the illustrated embodiments, the computer device 103 includes the one or more aforementioned applications 310 required for operation of the device 103, which applications require a config file for initialization and operation thereof. The computer device 103 further includes a device configuration manager component 315 communicatively coupled to each of the one or more device applications 310, and to at least storage component 320 (e.g., memory) configured to store one or more config files. With specific regard to the storage component 320, in accordance with the illustrated embodiments, and as described further below, it is configured and operative to store one or more ciphered configuration files required for execution by the at least one application 310 of computer device 103, whereby the device configuration manager 315 is configured and operative to provide the ciphered configuration file received from the system configuration manager 106 to the at least one application 310 for execution 310, and to the storage component 320 for storage therein, which may be performed in a simultaneous manner.

As mentioned further below (e.g., with reference to FIG. 4), the device configuration manager 315 is preferably configured and operative to, preferably upon initiation of the computer device 103, provide a call to the system configuration manger 106, via network 100, requesting a ciphered configuration file required for initialization and operation of an application 310 required for operation of the device 310. Once the device configuration manager 315 receives the aforementioned config file from the system configuration manger 106, it then provides this received ciphered configuration file to the at least one application 310 of the device 103 for operation thereof (as mentioned above).

It is to be appreciated that while the exemplary illustrated embodiment of FIG. 3 depicts a system configuration manger 106 coupled to a single computer device 310, it is to be understand and appreciated the system configuration manger 106 in accordance with the illustrated embodiments may be coupled to a plurality of computer devices 310, whereby the system configuration manger 106 provides the same functionality to each of the coupled plurality of computer devices 310 relative to the functionality described herein with respect to computer device 310 as shown in FIG. 3. It is to be further appreciated and understood that each of the device configuration manger component 315 and system configuration manger component 106 may consist of a respective software module, and wherein the software module of the system configuration manger component 106 may reside on a computer server device/component.

In accordance with the illustrated embodiments, the system configuration manager 106 preferably includes cryptographic primitives for determining cryptographic protocols to be used in generating ciphered configuration files for each of the plurality of computer devices 103 coupled to the system configuration manager 106, preferably via the secure communication network 100. It is to be appreciated and understood that cryptographic primitives are algorithms that are used to build cryptographic protocols for computer devices/systems, such as device 103. Examples of cryptographic primitives include (but are not limited to): one-way hash functions; a mathematical function that converts a variable-length input string into a fixed-length binary sequence; symmetric key cryptography; and an encryption system where the sender and receiver of a message share a single key to encrypt and decrypt the message. Other types of cryptography include asymmetric key cryptography, which is also known as public-key cryptography that uses two different keys to encrypt and sign data (e.g., the public key can be shared, but the private key is kept secret), as well as cryptography that utilizes hash functions. For instance, the cryptographic primitives of the illustrated embodiments may consist of one of: RSA public-key encryption, Elliptic Curve Cryptography (ECC) public-key cryptography techniques and Secure Hash Algorithms (SHA) cryptographic hash functions.

With the exemplary communication network 100 (FIG. 1), computing device 200 (FIG. 2), and system 300 (FIG. 3) being generally shown and discussed above, with reference now to FIG. 4 (and with continuing reference to FIGS. 1-3) description of the method of use (referenced generally by process 400) of the illustrated embodiments for providing a ciphered configuration file to a computer device 103 having at least one application 310 requiring a configuration file for enabling operation of the computer device 103, will now be provided. Starting at step 410, upon startup/initialization of a computer device 103 requiring execution of at least software application 310, the software application 310 preferably requests, from the device configuration manager 315, at least one config file for enabling operation thereof, step 415. In accordance with the illustrated embodiments, the device configuration manager 315 preferably determines if it has operative communication to the remotely located system configuration manger 106, preferably via secure communication network 100, step 420. If no, the device configuration manager 315 preferably retrieves the requested config file from the storage component 320 so as to then provide this retrieved config file to the requesting application 310, step 425.

Returning to step 420, if yes (the device configuration manager 315 is in operative communication to the remotely located system configuration manger 106), then at step 430, the device configuration manager 315 requests the requested config file, preferably in ciphered format, from the operatively coupled system configuration manger 106, step 430. Thereafter, the system configuration manger 106 generates and provides the requested ciphered config file to the device configuration manager component 315, step 435.

In accordance with the illustrated embodiments, once the requested ciphered config file is received in the device configuration manager 315 (from the system configuration manger 106), the device configuration manager 315 then pushes (provides) the aforesaid ciphered config file to the requesting application 310, and also preferably updates the storage component 320 with this newly received config file, step 440. The application 310 then executes/ initializes with this newly received config file to enable operation of the device 103, step 445.

In accordance with additional illustrated embodiments, the system configuration manager 106 is further operative and configured, while an application 310 is executing on an operating computer device 310, determine whether an updated config file is available for the aforesaid application 310 of the aforesaid operating computer device 103, step 450. If yes, then the system configuration manager 106 transmits the updated ciphered configuration file to the device configuration manger 315, preferably during operation of the computer device 103, whereafter the device configuration manger 315 causes this received updated ciphered configuration file to be stored in the storage component 320 (for subsequent retrieval and use by the application 310), step 455. Additionally, the device configuration manger 315 in certain illustrated embodiments is further operative and configured to message the at least one application 310 executing on the computer device 103 indicating an updated ciphered configuration file has been received causing the at least one application 310 to request and then initiate execution of the updated ciphered file for continued operation thereof, step 460. It is noted this is particularly advantageous in that ciphered config files for an application 310 of a device 103 are updated without requiring the need to update firmware of the device 103, which would necessitate termination of operation of the device 103, which could have serious undesirable consequences, especially for example in industrial applications.

With certain illustrated embodiments described above, it is to be appreciated that various non-limiting embodiments described herein may be used separately, combined or selectively combined for specific applications. Further, some of the various features of the above non-limiting embodiments may be used without the corresponding use of other described features. The foregoing description should therefore be considered as merely illustrative of the principles, teachings and exemplary embodiments of the illustrated embodiments, and not in limitation thereof.

It is to be understood that the above-described arrangements are only illustrative of the application of the principles of the illustrated embodiments. Numerous modifications and alternative arrangements may be devised by those skilled in the art without departing from the scope of the illustrated embodiments, and the appended claims are intended to cover such modifications and arrangements.

## Claims

1. A computer-implemented method for providing a ciphered configuration file to a computer device having at least one application requiring a configuration file for enabling operation of the computer device, comprising the steps:
receiving, from a system configuration manager component, a ciphered configuration file to the computer device, wherein the system configuration manager component is coupled to the device via a secure communication network;
pushing, upon reception of the ciphered configuration file in the computer device, the received ciphered configuration to the at least one application in the computer device; and
executing the at least one application in the computer device utilizing the received ciphered configuration file,
wherein the computer device is in particular a programmable logic controller (PLC).

2. The computer-implemented method as recited in claim 1, wherein the system configuration manager component is coupled to a plurality of computer devices, and includes cryptographic primitives for determining cryptographic protocols to be used in ciphered configuration files for each of the plurality of computer devices coupled to the system configuration manager component via the secure communication network.

3. The computer-implemented method as recited in claim 2, wherein the computer device includes a device system configuration manger component communicatively coupled the system configuration manager component, via the secure communication component, wherein the device system configuration manager component is configured to 1) upon initiation of the computer device, provide a call to the system configuration manger component requesting the ciphered configuration file, and 2) provide the received ciphered configuration file to the at least one application.

4. A computer device having at least one application requiring a configuration file for enabling operation of the computer device, comprising:
a device configuration manger component having:
a memory; and
a processor disposed in communication with the memory, and configured to issue a plurality of instructions stored in the memory, wherein the instructions cause the processor to:
receive, from a system configuration manager component, a ciphered configuration file, wherein the system configuration manager component is remotely coupled to the computer device via a secure communication network;
pushing, upon reception of the ciphered configuration file, the received ciphered configuration to the at least one application; and
executing the at least one application in the computer device utilizing the received ciphered configuration file,
wherein the computer device is in particular a programmable logic controller (PLC).

5. The computer device as recited in claim 4, wherein the processor is further configured to 1) upon initiation of the computer device, provide a call to the system configuration manger component requesting the ciphered configuration file, and 2) provide the received ciphered configuration file to the at least one application.

6. The computer device as recited in claim 5, further including a storage component configured to store one or more ciphered configuration files required for execution by the at least one application whereby the processor is further configured to provide the ciphered configuration file received from the system configuration manager component 1) to the at least one application for execution and 2) to the storage component for storage therein.

7. The computer device as recited in claim 6, wherein the processor is further configured to, upon initialization of the device, and when there is no communication between the computer device and the system configuration manager component, retrieve from the storage component a stored ciphered configuration file required for execution by the at least one application,
wherein the system configuration manager component is in particular further configured to transmit an updated ciphered configuration file to the device configuration manger component, during operation of the computer device, when it is determined the updated ciphered configuration file is applicable to the at least one application such the device configuration manger component stores the received updated ciphered configuration file in the storage component,
wherein the processor is in particular further configured to message the at least one application executing on the device indicating an updated ciphered configuration file has been received causing the at least one application to request and then initiate execution of the updated ciphered file for continued operation thereof.

8. A computer-implemented method for providing a ciphered configuration file from a system configuration manager component to a device configuration manger component associated with a computer device having at least one application requiring a configuration file for enabling operation of the computer device, comprising the steps:
transmitting, via a secure communication network, from the system configuration manager component to the device configuration manager component, a cipher configuration file responsive to a call from the device configuration manager component for the ciphered configuration file;
pushing, upon reception of the ciphered configuration file in the device, the ciphered configuration to the at least one application in the computer device; and
executing the at least one application in the computer device utilizing the received ciphered configuration file.

9. The computer-implemented method as recited in claim 1 or 8, wherein the computer device is a programmable logic controller (PLC),
wherein the system configuration manager component is in particular provided on a computer server coupled to a plurality of computer devices, each having a respective device configuration manager component,
wherein the system configuration manager component in particular includes cryptographic primitives for determining cryptographic protocols to be used in ciphered configuration files for each of the plurality of computer devices coupled to the system configuration manager component via the secure communication network.

10. The computer-implemented method as recited in claim 9, wherein the cryptographic primitives consist of one of: asymmetric keys algorithms, including RSA public-key encryption, Elliptic Curve Cryptography (ECC) public-key cryptography techniques; and symmetric keys, including AES, hashing algorithms including Secure Hash Algorithms (SHA) cryptographic hash functions.

11. The computer-implemented method as recited in claim 1 or 8, wherein the device configuration manger component is configured to 1) upon initiation of the computer device, provide a call to the system configuration manger component requesting the ciphered configuration file, and 2) provide the received ciphered configuration file to the at least one application,
wherein each of the device configuration manger component and system configuration manger component is in particular a respective software module.

12. The computer-implemented method as recited in claim 3 or 11, wherein the computer device further includes a storage component communicatively coupled to the device configuration manger component configured to store one or more ciphered configuration files required for execution by the at least one application whereby the device configuration manager component is configured to provide the ciphered configuration file received from the system configuration manager component 1) to the at least one application for execution and 2) to the storage component for storage therein.

13. The computer-implemented method as recited in claim 12, wherein the device configuration manager component is further configured to, upon initialization of the computer device, and responsive to no communication between the device configuration manager component and the system configuration manager component, retrieve from the storage a stored ciphered configuration file required for execution by the at least one application.

14. The computer-implemented method as recited in claim 13, wherein the system configuration manager component is further configured to transmit an updated cipher configuration file to the device configuration manger component responsive to determining the updated ciphered configuration file is applicable to the at least one application such the device configuration manger component stores the received updated cipher configuration file in the storage component.

15. The computer-implemented method as recited in claim 14, wherein the device configuration manger component is further configured to message the at least one application executing on the device indicating an updated ciphered configuration file has been received causing the at least one application to request and then initiate execution of the updated ciphered file for continued operation thereof.
